(19) **Europäisches Patentamt**
**European Patent Office**
**Office européen des brevets**

(11) **EP 4 775 291 A1**

(12) # EUROPEAN PATENT APPLICATION

(43) Date of publication:
**15.07.2026 Bulletin 2026/29**

(21) Application number: **25151309.9**

(22) Date of filing: **10.01.2025**

(51) International Patent Classification (IPC):
**B01D 37/02** (2006.01)   **B01D 39/16** (2006.01)
**C08F 6/00** (2006.01)   **C08J 11/02** (2006.01)

(52) Cooperative Patent Classification (CPC):
(C-Sets available)
**C08F 6/001; B01D 39/1623;** B01D 2239/0492;
B01D 2239/1258; B01D 2239/1291   (Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Basell Poliolefine Italia S.r.l.**
**20121 Milano (IT)**

(72) Inventors:
• **DI FEDERICO, Pier Luigi**
  **44122 Ferrara (IT)**
• **ZANDEGIACOMO RIZIO, Anna**
  **44122 Ferrara (IT)**

• **RINALDI, Riccardo**
  **44122 Ferrara (IT)**
• **BALESTRA, Enrico**
  **44122 Ferrara (IT)**
• **VITALE, Francesco**
  **44122 Ferrara (IT)**
• **BONACCORSI, Gian Luca**
  **44122 Ferrara (IT)**
• **MACCABIANI, Guido**
  **44122 Ferrara (IT)**

(74) Representative: **LyondellBasell**
**c/o Basell Poliolefine Italia**
**Intellectual Property**
**P.le Donegani 12**
**44122 Ferrara (IT)**

(54) **PROCESS OF SEPARATING A POLYMER-MONOMER MIXTURE**

(57)   A process of separating a polymer-monomer mixture into a solid fraction comprising the polymeric components and a gaseous fraction comprising the gaseous components containing monomers; the process comprising the step of: introducing the polymer-monomer mixture into a separation vessel comprising at least a filter bag, a first outlet for the gaseous fraction and second outlet for the solid fraction, which is on an opposite side of the filter bag with respect to the first outlet; applying a depression inside the filter bag so that the gaseous fraction passes through the filter bag and goes out of the vessel through the first outlet; and discharging the solid fraction through the second outlet; the filter bag comprises a filtering layer 9, which is comprises aramid fibers superficially coated with at least one perfluorocarbon.

(52) Cooperative Patent Classification (CPC): (Cont.)

C-Sets
**C08F 6/001, C08L 23/00**

## Description

TECHNICAL FIELD

The present invention relates to a process of separating a polymer-monomer mixture and a method of preparing an olefin polymer. The present invention further relates to a separation apparatus for separating the polymer-monomer mixture and plant for preparing the olefin polymer comprising such a separation apparatus.

BACKGROUND OF THE INVENTION

In a typical polymerization system, monomer (and possibly co-monomer, diluents, and catalyst) are fed into a continuously stirred reactor or a gas-phase polymerization reactor. The monomer (and possibly co-monomer) reacts to produce a product effluent containing solid polymer particles of various sizes, diluents (if used), unreacted monomer, and possibly catalyst. The effluent is removed from the reactor, and typically contains a good amount of unreacted monomer. For economical operation of this process the unreacted monomer and/or diluents are separated from the polymer solids and then returned to the reactor(s).

The reactors that are currently used are of different types.

WO2018087209A1 discloses a process for preparing an olefin polymer in the presence of hydrogen in a gas-phase polymerization reactor comprising three or more polymerization zones and at least two thereof are sub-zones of a polymerization unit, in which the growing polymer particles flow downward in a densified form.

WO2019154756A1 discloses gas-phase polymerization reactor for the gas-phase polymerization of olefins comprising at least one polymerization zone which is equipped with a recycle line for withdrawing reaction gas from the reactor, leading the reaction gas through a heat-exchanger for cooling and feeding the reaction gas back to the reactor. The recycle line is equipped with the heat-exchanger, a centrifugal compressor comprising variable guide vanes, and a butterfly valve.

WO2008095807A1 discloses an apparatus for the liquid-phase polymerization of one or more $\alpha$-olefins comprising: a first reactor selected from a loop reactor or a continuously stirred tank reactor; at least a downstream loop reactor; and a connection line for transferring a polymer slurry from said first reactor to said downstream loop reactor.

It is known to separate polymer solids from unreacted monomer by feeding the effluent to a separation apparatus provided with a plurality of filter bags (for example, as disclosed in US7098301).

Filter bags material has significant impact on the filtration performance and on the life of the bags themselves. Goretex® is usually used as bags material in polypropylene plants due to it good resistance on metalloorganic chemicals used in the polymerization reactions and that can be present in the filtration environment. Unfortunately Goretex® tissue can adsorb the polymer fines that are easily nested in the filtration media reducing suddenly the filtration efficiency and the life time of the bags, that must be changed with a certain frequency.

The object of the present invention is to provide a process of separating a polymer-monomer mixture, a method of preparing an olefin polymer, a separation apparatus for separating the polymer-monomer mixture and a plant for preparing the olefin polymer, that allow the drawbacks of the known art to be at least partially overcome, and which eventually are, at the same time, simple and inexpensive to implement.

SUMMARY

According to the invention there is provided a process of separating a polymer-monomer mixture, a method of preparing an olefin polymer, a separation apparatus and a plant according to the appended independent claims and, preferably, according to any one of the claims directly or indirectly depending on the independent claims.

BRIEF DESCRIPTION OF THE DRAWINGS

The invention is hereinafter described with reference to the accompanying drawings, which depict a non-limiting embodiment thereof, wherein:

- figure 1 is schematic and side view of a separation apparatus and a plant in accordance with the present disclosure;
- figure 2 is a perspective view of a component of the apparatus of figure 1.

DETAILED DESCRIPTION

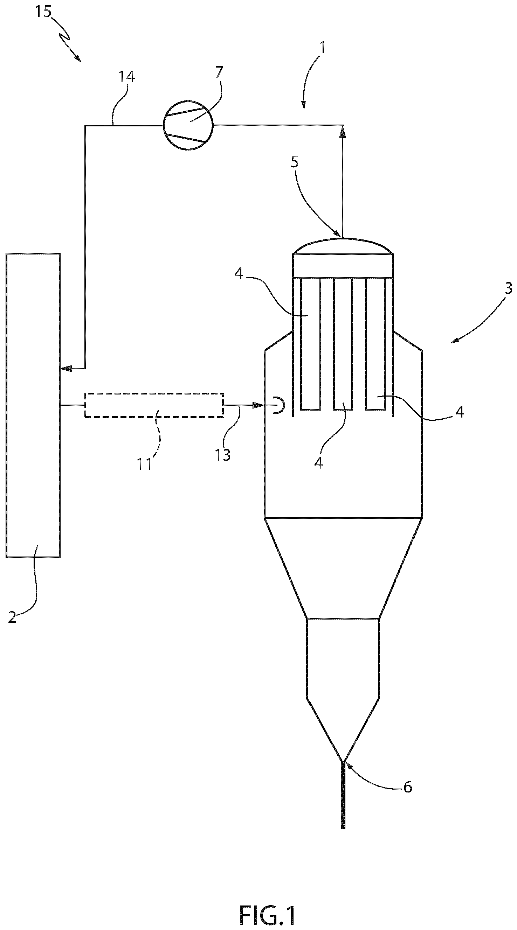

With reference to figure 1, in accordance with a first aspect of the present invention, it is herein provided a separation apparatus 1 for separating a polymer-monomer mixture, which comes from a polymerization reactor 2 and comprises polymeric components and gaseous components, into a solid fraction comprising the polymeric components and a gaseous fraction comprising the gaseous components containing monomers.

The separation apparatus 1 comprises:

a separation vessel 3 provided with at least a filter bag 4 (in particular, filter bags 4 - in the embodiment of figure 1 three filter bags 4 are depicted), a first outlet 5 for the gaseous fraction and second outlet 6 for the solid fraction, which is on an opposite side of the filter bag 4 with respect to the first outlet 5; and a suction device 7 for applying a depression inside the filter bag(s) 4 so that the gaseous fraction passes through the filter bag(s) 4 and goes out of the vessel 3 through the first outlet 5. The suction device can be, e.g. a pump or a compressor and does not need to be directly connected to the separation vessel 3.

The second outlet 6 is designed for discharging the solid fraction through the second outlet 6.

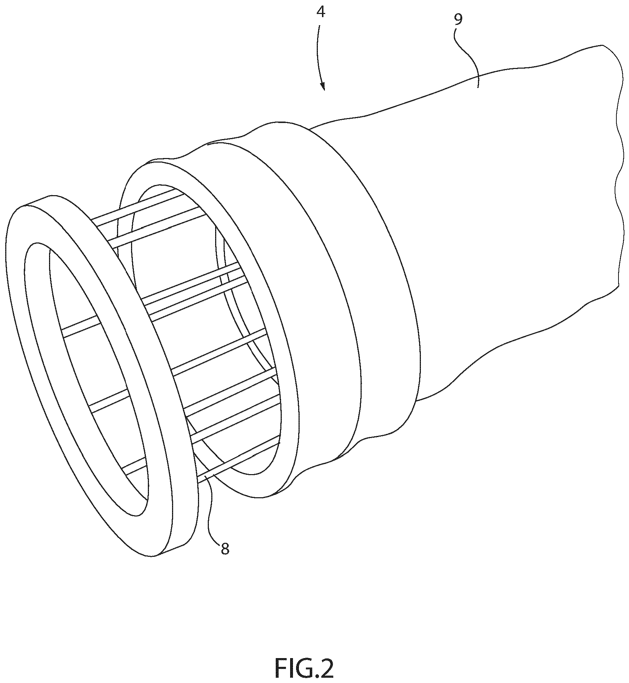

Making particular reference to figure 2, the filter bag 4 comprises a structural support 8 (in particular, a bag filter cage) and a filtering layer 9, which is mounted on the structural support 8 and comprises (in particular, consists of) aramid fibers superficially coated with at least one perfluorocarbon (in particular, polytetrafluoroethylene - PTFE).

It has been experimentally observed that in this way the filtering layer 9 surprisingly absorbs very little polymer fines and have, also for this reason, a very long lifetime, in particular significantly longer than that of corresponding layers of Goretex®.

It has also been observed that the filtering layer 9 has an unexpected resistance to the polymer-monomer mixture coming from a polymerization reactor 2. Please note that such a polymer-monomer mixture is a particularly aggressive composition, as it typically contains a portion of polymerization catalyst/s (in particular, organometallic compounds; more in particular, alkylaluminium compounds - the polymerization catalyst/s is/are disclosed in are detail below).

Figure 2 depicts an embodiment of the filter bag 4. However, please note that in order to better show the structure of the structural support 8 the filtering layer 9 is slightly moved with respect to its proper position. The filtering layer 9 usually covers the structural support 8 (bag filter cage) substantially entirely (so that the gaseous fraction that goes inside the filter 4 must necessarily pass through the filtering layer 9.

In the present text, the term "superficially coated" indicates that the aramid fibers are at least partially (in particular, predominantly) covered with the at least one perfluorocarbon (in particular, polytetrafluoroethylene - PTFE). In some non-limiting instances, the aramid fibers are substantially completely covered with at least one perfluorocarbon (in particular, polytetrafluoroethylene - PTFE).

Advantageously but not necessarily, the filtering layer 9 has an air permeability lower than 300 (in particular, lower than 200; more in particular lower than 160) $\frac{L}{dm^2 \times min}$ . More precisely but not necessarily, the filtering layer 9 has an air permeability from about 80 (in particular, from about 100; more in particular, from about 140) to about 290 (in particular, to about 220; more in particular, to about 170) $\frac{L}{dm^2 \times min}$ .

In particular, the air permeability is measured according to EN ISO 9237:1995 (@ 200 Pa).

In carried out experiments, the filtering layers 9 with the above identified permeabilities have surprisingly shown to properly work for separating the two fractions, achieving a good separation, while, at the same time, to have a lower absorption of polymer fines.

Advantageously but not necessarily, the filtering layer 9 comprises (in particular, consists of) meta-aramid fibers.

Advantageously but not necessarily, the filtering layer 9 comprises (in particular, consists of) aramid fibers (in particular, meta-aramid fibers) superficially coated with polytetrafluoroethylene.

Advantageously but not necessarily, the aramid fibers of the filtering layer 9 are needle felted. In other words, the filtering layer 9 is (consists of) needle felt.

According to some non-limiting embodiments, the filtering layer 9 has a tensile strength of at least about 300 N. More precisely, the filtering layer 9 has longitudinal tensile strength of at least about 400 N up to about 1000 N (in particular, up to about 800 N; more in particular, up to about 600 N) and/or a cross strength of at least about 700 N (in particular, of at least about 900 N; more in particular, of at least 1100 N) possibly up to about 2000 N.

In particular, the tensile strength is measured according to EN ISO 9073-3:1989 (sample size 200 mm-50 mm; sampling parallel to the scrim threads; deformation rate 200 mm/min).

Advantageously but not necessarily, the filtering layer 9 has a thickness (BWF Envirotec standard 01) from about 1.5 mm (in particular, from about 2 mm; more in particular, from 2.1) to about 3 mm (in particular, to about 2.5 mm).

In addition or alternatively, the filtering layer 9 has an area weight (BWF Envirotec standard 04) from about 400 g/m² (in particular, from about 450 g/m²) to about 600 g/m² (in particular, to about 550 g/m²).

In addition or alternatively, the filtering layer 9 has a density (BWF Envirotec standard 01) from about 0.15 g/cm³ (in particular, from 0.2 g/cm³; more in particular, from 0.21 g/cm³) to about 0.3 g/cm³ (in particular, to about 0.25 g/cm³).

In particular, the filtering layer 9 has a separation efficiency (maximum dust content in outlet gas) not higher than 35 mg/m³ (more in particular, not higher than 30 mg/m³).

Please note that according to different embodiments the polymerization reactor 2 may be a single reactor or a plurality of reactors arranged, for example, in parallel or in succession (one downstream of another).

Examples of the polymerization reactor 2 are disclosed in US2018178180A1, US20200031957A1, US20110054127A1, WO2018087209A1, WO2019154756A1 and WO2008095807A1.

In accordance with a second aspect of the present invention, a plant 15 for preparing an olefin polymer is also herein provided. The plant 15 comprises the polymerization reactor 2 (as above disclosed), the separation apparatus 3 (as above disclosed), a first connection 13 for feeding the polymer-monomer mixture from the polymerization reactor 2 to the separation apparatus 3 and a second connection 14 for conveying said gaseous fraction from the separation apparatus 3 back the polymerization reactor 2.

According to some non-limiting embodiments, the plant 15 comprises also a separation vaporizer 11, which is designed to treat the polymer-monomer mixture so that at least (part of) the monomers vaporize(s). In this case, the reactor 2 is typically designed to implement a liquid-phase polymerization.

According to some non-limiting embodiments, the plant 15 also comprises a pump (known per se and not depicted) arranged at the second connection 14 for conveying the polymer-monomer mixture along the second connection 14.

In accordance with a third aspect of the present invention, it is herein provided a process of separating a polymer-monomer mixture, which comes from a polymerization reactor 2 and comprises polymeric components and gaseous components, into a solid fraction comprising the polymeric components and a gaseous fraction comprising the gaseous components containing monomers.

The process comprises the steps of: introducing the polymer-monomer mixture into a separation vessel 3 comprising at least a filter bag 4, a first outlet 5 for the gaseous fraction and a second outlet 6 for the solid fraction, which is on an opposite side of the filter bag 4 with respect to the first outlet 5; applying a depression inside the filter bag 4 (in particular, by means of a suction device 7) so that the gaseous fraction passes through the filter bag 4 and goes out of the separation vessel 3 through the first outlet 5; and discharging the solid fraction through the second outlet 6.

The filter bag 4 comprises a structural support 8 and a filtering layer 9, which is mounted on the structural support 8 and comprises aramid fibers superficially coated with at least one perfluorocarbon.

In particular, the separation vessel 3 and its components (e.g. the filter bag 4, the outlets 5 and 6 and possibly the suction device) are as defined above with respect to the first aspect of the present invention.

Advantageously but not necessarily, during the step of applying, the applied depression inside the filter bag is at least about 10 bar (in particular, at least about 15 bar; more in particular, at least about 18 bar). In the contest of the present disclosure, for "depression" it is intended the differential pressure between the filter bag and the upstream polymerization reactor.

Alternatively or in addition, during the step of applying, the applied depression inside the filter bag is up to about 28 bar (in particular, to about 25 bar; more in particular, to about 20 bar).

With the selected pressures it is possible to more efficiently separate the solid fraction and the gaseous fraction. In particular, it has been observed that the filtering layer 9 as herein defined is particularly resistant to relatively high depressions.

Advantageously but not necessarily, during the step of applying, the temperature inside the filter bag is from about 35°C (in particular, from about 50°C; more in particular, from about 65°C) to about 120°C (in particular, to about 100°C, more in particular, to about 90°C; still more in particular, to about 80°C).

According to some non-limiting embodiments, the polymeric component comprises (in particular, is) homo-polymer(s) and/or co-polymer(s) of propylene and the monomers comprise (are) propylene.

In addition or alternatively, the polymeric component comprises (in particular, is) homo-polymer(s) and/or co-polymer(s) of ethylene and the monomers comprise (are) ethylene.

In accordance with a fourth aspect of the present invention, it is herein also provided a method of preparing an olefin polymer comprising a polymerization step, during which an olefin homopolymerize or copolymerize together with one or more other olefins in the polymerization reactor 2 in the presence of a polymerization catalyst; the method comprises a process as above described (in accordance with the first aspect of the present invention), wherein the polymer-monomer mixture comes from the polymerization reactor 2.

Advantageously but not necessarily, the gaseous fraction, which comprises the gaseous components containing monomers and is obtained by the process of separation, is recycled to the polymerization reactor 2.

Please note that according to different embodiments the polymerization step may be carried out in a single reactor or a plurality of reactors arranged, for example, in parallel or in succession (one downstream of another).

In some non-limiting cases, the polymerization step is carried out at temperatures of from 20 to 200°C and pressures of from 0.5 to 10 MPa.

Examples of how polymerization step is carried out are disclosed in US2018178180A1, US20200031957A1, US20110054127A1, WO2018087209A1, WO2019154756A1 and WO2008095807A1.

More precisely, the polymerization step may be carried out in gas-phase or in liquid-phase.

Where the polymerization step is carried out in the liquid phase. The method comprises also a vaporization step, during which the polymer-monomer mixture is treated so that at least (part of) the monomers vaporize(s). In these cases, the polymer-monomer mixture is fed to the separation vessel 3 (only) after having undergone the vaporization step.

In particular, the vaporization step is carried out by a vaporizer 11 connecting the reactor 2 to the separation apparatus 1 (in particular to the separation vessel 3). In particular, the vaporizer 11 is arranged at the second connection 14.

More precisely, the vaporization step is carried out when the polymerization step is liquid-phase polymerization (as disclosed in WO2008095807A1).

In some non-limiting embodiments, the polymerization step is carried out by using olefin polymerization catalysts, alternatively titanium-based Ziegler-Natta-catalysts, Phillips catalysts based on chromium oxide, or single-site catalysts. As used herein, single-site catalysts are catalysts based on chemically uniform transition metal coordination compounds, such as metallocene catalysts. In some non-limiting embodiments, mixtures of two or more different catalysts are used. In some non-limiting embodiments, the mixed catalyst systems are designated as hybrid catalysts.

In particular, the polymerization step is carried out in the presence of Ziegler-Natta catalysts made from or containing:

  i. a solid catalyst component made from or containing Mg, Ti, a halogen and an electron donor compound (internal donor),
  ii. an alkylaluminium compound, and
  iii. optionally, an electron-donor compound (external donor).

In some non-limiting embodiments, component (i) is prepared by contacting a magnesium halide, a titanium compound having at least a Ti-halogen bond, and optionally an electron donor compound. In some non-limiting embodiments, the magnesium halide is $MgCl_2$ in active form as a support for Ziegler-Natta catalysts. In some non-limiting embodiments, the titanium compounds are $TiCl_4$, $TiCl_3$, or Ti-haloalcoholates of formula $Ti(OR)_{n-y}X_y$, where n is the valence of titanium, y is a number between 1 and n-1, X is a halogen and R is a hydrocarbon radical having from 1 to 10 carbon atoms, can also be used.

In some non-limiting embodiments, electron donor compounds for preparing Ziegler type catalysts are selected from the group consisting of alcohols, glycols, esters, ketones, amines, amides, nitriles, alkoxysilanes and aliphatic ethers. In some non-limiting embodiments, these electron donor compounds are used alone or in mixtures with other electron donor compounds.

In some non-limiting embodiments, other solid catalyst components used are based on a chromium oxide supported on a refractory oxide, such as silica, and activated by a heat treatment. Catalysts obtainable from those components consist of chromium (VI) trioxide chemically fixed on silica gel. These catalysts are produced under oxidizing conditions by heating the silica gels that have been doped with chromium (III) salts (precursor or precatalyst). During this heat treatment, the chromium (III) oxidizes to chromium (VI), the chromium (VI) is fixed and the silica gel hydroxyl group is eliminated as water.

In some non-limiting embodiments, other solid catalyst components used are single-site catalysts supported on a carrier, such as metallocene catalysts, made from or containing:

  i. at least a transition metal compound containing at least one n bond; and
  ii. at least a cocatalyst selected from an alumoxane or a compound able to form an alkyl-metallocene cation.

In some non-limiting embodiments, when the catalyst includes an alkylaluminium compound, such as in Ziegler-Natta catalysts, the molar ratio of solid catalyst component to alkylaluminium compound introduced into the polymerization reactor is in the range from 0.05 to 3, alternatively from 0.1 to 2, alternatively from 0.5 to 1.

In particular (as a consequence), the polymer-monomer mixture, which undergoes the (separation) process (according with the third aspect of the invention) contains (some amounts of) the above presented catalyst(s) (in particular one or more organometallic compounds; more in particular, alkylaluminium compounds).

Advantageously but not necessarily, the process in accordance with the third aspect of the present invention is implemented by the apparatus 1 of the first aspect of the invention.

Analogously, not necessarily, the apparatus 1 of the first aspect of the invention is configured to implement the process of the third aspect of the present invention.

In addition or alternatively, the method in accordance with the fourth aspect of the present invention is implemented by the plant 15 of the second aspect of the invention.

Analogously, not necessarily, the plant 15 of the second aspect is configured to implement the method of the fourth aspect of the present invention.

Unless expressly indicated to the contrary, the contents of the references (articles, books, and patent applications etc.) cited in this text are herein recalled in full. In particular, the above-mentioned references are herein incorporated by reference.

**Claims**

1. A process of separating a polymer-monomer mixture, which comes from a polymerization reactor (2) and comprises polymeric components and gaseous components, into a solid fraction comprising the polymeric components and a gaseous fraction comprising the gaseous components containing monomers; the process comprising the steps of:

   - introducing the polymer-monomer mixture into a separation vessel (3) comprising at least a filter bag (4), a first outlet (5) for the gaseous fraction and a second outlet (6) for the solid fraction, which is on an opposite side of the filter bag (4) with respect to the first outlet (5);
   - applying a depression inside the filter bag (4) so that the gaseous fraction passes through the filter bag (4) and goes out of the separation vessel (3) through the first outlet (5); and
- discharging the solid fraction through the second outlet (6);

the filter bag (4) comprising a structural support (8) and a filtering layer (9), which is mounted on the structural support (8) and comprises aramid fibers superficially coated with at least one perfluorocarbon.

2. The process of claim 1, wherein, during the step of applying, the applied depression inside the filter bag (4) is from 10 bar to 28 bar.

3. The process of claim 1 or 2, wherein, during the step of applying, the applied depression inside the filter bag (4) is from 18 bar to 20 bar.

4. The process of any one of claims 1 to 3, wherein, during the step of applying, the temperature inside the filter bag (4) is from 35°C to 120°C.

5. The process of any one of claims 1 to 4, wherein the filtering layer (9) has an air permeability from 80 to

$$300 \ \frac{L}{dm^2 \times min} \ .$$

6. The process of any one of claims 1 to 5, wherein the perfluorocarbon is polytetrafluoroethylene (PTFE).

7. The process of any one of claims 1 to 6, wherein the filtering layer (9) consists of meta-aramid fibers superficially coated with polytetrafluoroethylene (PTFE).

8. The process of any one of claims 1 to 7, wherein the polymeric component is homo-polymer and/or co-polymer of propylene and the monomers comprise propylene.

9. The process of any one of claims 1 to 8, wherein the polymer-monomer mixture comprises a polymerization catalyst.

10. A method of preparing an olefin polymer comprising homopolymerizing an olefin or copolymerizing the olefin together with one or more other olefins in a polymerization reactor in the presence of a polymerization catalyst; the method comprises a process of separation according to any one of claims 1 to 9; the polymer-monomer mixture coming from the polymerization reactor.

11. The method according to claim 10, wherein the gaseous fraction, which comprises the gaseous components containing monomers and is obtained by the process of separation, is recycled to the polymerization reactor (2).

12. A separation apparatus (1) for separating a polymer-monomer mixture, which comes from a polymerization reactor (2) and comprises polymeric components and gaseous components, into a solid fraction comprising the polymeric components and a gaseous fraction comprising the gaseous components containing monomers; the separation apparatus (1) comprising:

   - a separation vessel (3) provided with at least a filter bag (4), a first outlet (5) for the gaseous fraction and second outlet (6) for the solid fraction, which is on an opposite side of the filter bag (4) with respect to the first outlet (6); and
   - a suction device (7) for applying a depression inside the filter bag (4) so that the gaseous fraction passes through the filter bag (4) and goes out of the separation vessel (3) through the first outlet (5);

   the second outlet (6) being designed for discharging the solid fraction; the filter bag (4) comprising a structural support (8) and a filtering layer (9) mounted on the structural support (8), which comprises aramid fibers superficially coated with at least one perfluorocarbon.

13. The separation apparatus of claim 12, wherein the filtering layer (9) has an air permeability from 80 to

$$300 \ \frac{L}{dm^2 \times min} \ .$$

14. The separation apparatus of claim 12 or 13, wherein the aramid fibers superficially coated with polytetrafluoroethylene (PTFE); in particular, the filtering layer (9) consists of Meta-aramid fibers superficially coated with polytetrafluoroethylene.

15. A plant for preparing an olefin polymer comprising a polymerization reactor, a separation apparatus according to any one of claims 12 to 14, a first connection for conveying the polymer-monomer mixture comes from the polymerization reactor to the separation apparatus and a second connection for conveying said gaseous fraction from the separation apparatus back the polymerization reactor.

FIG.1

FIG.2

Europäisches
Patentamt

European
Patent Office

Office européen
des brevets

# EUROPEAN SEARCH REPORT

**Application Number**

EP 25 15 1309

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 6 110 243 A (WNENCHAK RAYMOND M [US] ET AL) 29 August 2000 (2000-08-29) * column 4, line 8 - column 6, line 25; claims 1-14 * | 1-15 | INV. B01D37/02 B01D39/16 C08F6/00 C08J11/02 |
| Y | CN 102 166 455 A (XIAMEN MEIDASI ENVIRONMENTAL PROT INDUSTRY CO LTD) 31 August 2011 (2011-08-31) * embodiments; paragraph [0005] - paragraph [0023]; claims 1-10 * | 1-15 | |
| Y | US 2003/156999 A1 (KNUDSEN KARIN H [NO] ET AL) 21 August 2003 (2003-08-21) * paragraph [0004] - paragraph [0044]; claims 1-13; figure 1 * | 1-15 | |
| Y | CN 106 390 623 A (ZHEJIANG YUBANG FILTER MAT TECH CO LTD) 15 February 2017 (2017-02-15) * preparation methods 1 and 2; paragraph [0005] - paragraph [0012]; claims 1-6 * | 1-15 | TECHNICAL FIELDS SEARCHED (IPC) |
| Y | EP 2 090 828 A2 (KARPF RUDI [DE]) 19 August 2009 (2009-08-19) * paragraph [0036]; claims 1-13 * | 1-15 | C08J B01D C08F |
| Y | CN 110 545 890 A (CHEVRON PHILLIPS CHEMICAL CO LP) 6 December 2019 (2019-12-06) * the whole document * | 1-15 | |
| Y | US 7 098 301 B1 (SMITH LAWRENCE C [US]) 29 August 2006 (2006-08-29) * column 1, line 55 - column 4, line 67; claims 1-52; figure 1 * | 1-15 | |

-/--

The present search report has been drawn up for all claims

| Place of search | Date of completion of the search | Examiner |
|---|---|---|
| Munich | 25 June 2025 | Gold, Josef |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**EUROPEAN SEARCH REPORT**

Application Number

EP 25 15 1309

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | EP 2 253 375 B1 (NIPPON CATALYTIC CHEM IND [JP]) 6 January 2016 (2016-01-06) * paragraph [0049] - paragraph [0129]; claims 1-17; figure 1; examples 1-4 * ----- | 1-15 | |
| | | | **TECHNICAL FIELDS SEARCHED (IPC)** |

The present search report has been drawn up for all claims

| Place of search | Date of completion of the search | Examiner |
|---|---|---|
| Munich | 25 June 2025 | Gold, Josef |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

...........................................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 15 1309

This annex lists the patent family members relating to the patent documents cited in the above-mentioned European search report.
The members are as contained in the European Patent Office EDP file on
The European Patent Office is in no way liable for these particulars which are merely given for the purpose of information.

25-06-2025

| Patent document cited in search report | | Publication date | Patent family member(s) | | Publication date |
|---|---|---|---|---|---|
| US 6110243 | A | 29-08-2000 | AU | 3727897 A | 09-02-1998 |
| | | | CA | 2260105 A1 | 22-01-1998 |
| | | | DE | 69711201 T2 | 21-11-2002 |
| | | | EP | 0928220 A1 | 14-07-1999 |
| | | | JP | 2000513648 A | 17-10-2000 |
| | | | US | 5928414 A | 27-07-1999 |
| | | | US | 6110243 A | 29-08-2000 |
| | | | WO | 9802229 A1 | 22-01-1998 |
| CN 102166455 | A | 31-08-2011 | NONE | | |
| US 2003156999 | A1 | 21-08-2003 | AT | E349250 T1 | 15-01-2007 |
| | | | AU | 7426301 A | 02-01-2002 |
| | | | BR | 0111833 A | 08-07-2003 |
| | | | CN | 1447708 A | 08-10-2003 |
| | | | DE | 60125535 T2 | 26-04-2007 |
| | | | EP | 1294458 A1 | 26-03-2003 |
| | | | ES | 2276800 T3 | 01-07-2007 |
| | | | JP | 2003535679 A | 02-12-2003 |
| | | | PT | 1294458 E | 28-02-2007 |
| | | | US | 2003156999 A1 | 21-08-2003 |
| | | | WO | 0197940 A1 | 27-12-2001 |
| | | | ZA | 200300036 B | 07-11-2003 |
| CN 106390623 | A | 15-02-2017 | CN | 105169829 A | 23-12-2015 |
| | | | CN | 106390623 A | 15-02-2017 |
| | | | CN | 106391386 A | 15-02-2017 |
| EP 2090828 | A2 | 19-08-2009 | DE | 102008009004 A1 | 17-12-2009 |
| | | | EP | 2090828 A2 | 19-08-2009 |
| CN 110545890 | A | 06-12-2019 | BR | 112019021591 A2 | 12-05-2020 |
| | | | CN | 110545890 A | 06-12-2019 |
| | | | EP | 3612286 A1 | 26-02-2020 |
| | | | EP | 4039349 A1 | 10-08-2022 |
| | | | RU | 2019129716 A | 18-05-2021 |
| | | | US | 2018298119 A1 | 18-10-2018 |
| | | | WO | 2018194872 A1 | 25-10-2018 |
| US 7098301 | B1 | 29-08-2006 | NONE | | |
| EP 2253375 | B1 | 06-01-2016 | CN | 101970101 A | 09-02-2011 |
| | | | CN | 101970102 A | 09-02-2011 |
| | | | CN | 101970299 A | 09-02-2011 |
| | | | CN | 101970316 A | 09-02-2011 |
| | | | CN | 101970546 A | 09-02-2011 |

EPO FORM P0459

For more details about this annex : see Official Journal of the European Patent Office, No. 12/82

page 1 of 2

## ANNEX TO THE EUROPEAN SEARCH REPORT
## ON EUROPEAN PATENT APPLICATION NO.

EP 25 15 1309

This annex lists the patent family members relating to the patent documents cited in the above-mentioned European search report.
The members are as contained in the European Patent Office EDP file on
The European Patent Office is in no way liable for these particulars which are merely given for the purpose of information.

25-06-2025

| Patent document cited in search report | Publication date | Patent family member(s) | Publication date |
|---|---|---|---|
| | | EP 2253375 A1 | 24-11-2010 |
| | | EP 2253376 A1 | 24-11-2010 |
| | | EP 2253563 A1 | 24-11-2010 |
| | | EP 2253657 A1 | 24-11-2010 |
| | | EP 2263939 A1 | 22-12-2010 |
| | | JP 5350361 B2 | 27-11-2013 |
| | | JP 5524042 B2 | 18-06-2014 |
| | | JP 5558343 B2 | 23-07-2014 |
| | | JP 5635397 B2 | 03-12-2014 |
| | | JP 5706156 B2 | 22-04-2015 |
| | | JP WO2009113671 A1 | 21-07-2011 |
| | | JP WO2009113672 A1 | 21-07-2011 |
| | | JP WO2009113673 A1 | 21-07-2011 |
| | | JP WO2009113678 A1 | 21-07-2011 |
| | | JP WO2009113679 A1 | 21-07-2011 |
| | | US 2011003926 A1 | 06-01-2011 |
| | | US 2011006140 A1 | 13-01-2011 |
| | | US 2011009590 A1 | 13-01-2011 |
| | | US 2011011491 A1 | 20-01-2011 |
| | | US 2011015351 A1 | 20-01-2011 |
| | | WO 2009113671 A1 | 17-09-2009 |
| | | WO 2009113672 A1 | 17-09-2009 |
| | | WO 2009113673 A1 | 17-09-2009 |
| | | WO 2009113678 A1 | 17-09-2009 |
| | | WO 2009113679 A1 | 17-09-2009 |

page 2 of 2

**REFERENCES CITED IN THE DESCRIPTION**

**Patent documents cited in the description**

- WO 2018087209 A1
- WO 2019154756 A1
- WO 2008095807 A1
- US 7098301 B
- US 2018178180 A1
- US 20200031957 A1
- US 20110054127A1WO2018087209 A1
- US 20110054127 A1